# EUROPEAN PATENT APPLICATION

(11) **EP 1 079 654 A1**
(43) Date of publication of application: **28.02.2001**
(21) Application number: 99116624.0
(22) Date of filing: 25.08.1999
(51) Int. Cl.: H04Q 7/38

(54) **Identification of defect or stolen mobile terminals and prevention of their use**

(71) Applicant: Sony International (Europe) GmbH, 50829 Köln (DE)
(72) Inventor: weber, Mattias, c/o Sony Internation (Europe) GmbH, 85609 Ascheim-Dornach (DE)
(74) Representative: Körber, Martin, Dipl.-Phys.

(57) **Abstract**

The present invention relates to a mobile terminal (1) for a wireless telecommunication system, with transmitting means (5) for transmitting identification information identifying the mobile terminal to a base station (10) of the wireless telecommunication system, receiving means (4) for receiving mode change information from the base station (10) depending on the identification information previously transmitted, control means (6) for detecting mode change information received in said receiving means (4) and for changing the mode of the mobile terminal (1) depending on detected mode change information for preventing the use of said mobile terminal (1). The present invention further relates to a network structure for a wireless telecommunication system, with a base station (10) comprising receiving and transmitting means (12, 13) for communicating with one or more mobile terminals (1), and a register means (17) for storing selected identification information identifying a number of selected mobile terminals, whereby the base station (10), upon receiving identification information from a mobile terminal (1), supplies said received identification information to the register means (17), which compares the received identification information with the selected identification information at outputs a corresponding control signal to the base station (10) in case that the received identification information is contained in the selected identification information, whereafter the base station (10) transmits mode change information to said mobile terminal (1) for preventing the use of said mobile terminal.

The present invention provides a simple and effective way for preventing the use of selected mobile terminals, e. g. stolen or technically defect mobile terminals, in a wireless telecommunication system.

## Description

The present invention relates to the identification of defect or stolen mobile terminals of a wireless telecommunication system and the prevention of their use. Particularly, the present invention relates to a mobile terminal for a wireless telecommunication system, which can be identified and prevented to be used, e. g. in case of theft or technical defects. Further, the present invention relates to a network structure for a wireless telecommunication system comprising a base station for communicating with one or more mobile terminals, which is able to identify selected mobile terminals and prevent identified selected mobile terminals to be used. Further, the present invention relates to a method for preventing the use of selected mobile terminals of a wireless telecommunication system, e. g. for preventing the use of stolen or defect mobile terminals.

Several systems are known at present to prevent the use of selected mobile terminals in a wireless telecommunication system. Thereby, two general cases of unwanted mobile terminals can be distinguished, namely technical defect mobile terminals and stolen mobile terminals. In relation to technical defect mobile terminals, it occurs that mobile terminals which do not comply with the specifications of the respective telecommunication system, emit radio waves in frequency bands, which belong either to neighbouring channels or do not belong to the respective cellular spectrum at all. This results in increased network traffic, since data frames have to be exchanged more often between the base stations and the mobile terminals within the respective cell of the telecommunication system. This leads to a degradation in the network performance. On the other hand, more and more mobile terminals get stolen, since it is usually sufficient, e. g. in the GSM system, to exchange the SIM card of the stolen mobile terminal to be able to use the stolen mobile terminal again. Usually the electronic serial numbers of the mobile terminals, which are called international identity mobile equipment (IMEI) in the GSM system, are stored in a central data base of the telecommunication network, which is e. g. updated every day for all GSM networks worldwide. The problem here is that an operator or a service provider can only deny service for a specific SIM card. Once the SIM card is changed, the mobile terminal can be used again without problems.

EP 0 757 502 A2 discloses a mobile telephone network in which user identify module locking is activated automatically by the network via signalling over the base station. The telephone network periodically or regularly queries the IMEI of the mobile terminal being used by the subscriber of the system. If the IMEI of the mobile terminal is found on a list of stolen mobile terminals, the network commands the mobile terminal to activate user identify module locking by messaging to the mobile terminal. Thereby, the mobile terminal is locked to the SIM card presently inserted so that the mobile terminal is usable only with this inserted SIM card. The mobile terminal therefore remains operational with the new SIM card.

US 5 659 595 discloses a self-disabling device for a portable terminal used in a mobile telephone network which includes a register holding an identification number of the portable terminal and a buffer memory for temporarily storing short information messages transmitted by a control station of the network. One message contains a list of identifier numbers of terminals used fraudulently. A comparator compares the identifier number of the mobile terminal with each of the identifier numbers in the list and the transmission of calls by the portable terminal is disabled in response to a positive comparison result from the comparator. In this system, the mobile terminals check themselves if they are stolen or fraudulently used, whereafter the mobile terminal issues a message to the base station telling that it is a stolen terminal and then becomes non-operational.

The object of the present invention is to provide a mobile terminal for a wireless telecommunication system, a network structure for a wireless telecommunication system and a method for preventing the use of selected mobile terminals of a wireless telecommunication system, in which the use of selected (unwanted) mobile terminals can be prevented in a simple and efficient way.

This object is achieved by a mobile terminal for a wireless telecommunication system according to claim 1, comprising transmitting means for transmitting identification information identifying the mobile terminal to a base station of the wireless telecommunication system, receiving means for receiving mode change information from the base station depending on the identification information previously transmitted, control means for detecting mode change information received in the receiving means and for changing the mode of the mobile terminal depending on detected mode change information for preventing the use of said mobile terminal.

The above object is further achieved by a network structure for a wireless telecommunication system according to claim 8, with a base station comprising receiving and transmitting means for communicating with one or more mobile terminals, and a register means for storing selected identification information identifying a number of selected mobile terminals, whereby said base station, upon receiving identification information from a mobile terminal, supplies the received identification information to the register means, which compares the received identification information with the selected identification information and outputs a corresponding control signal to the base station in case that the received identification information is contained in the selected identification information, whereafter the base station transmits mode change information to said mobile terminal for preventing the use of said mobile terminal.

The above object is further achieved by a method for preventing the use of selected mobile terminals of a wireless telecommunication system according to claim 13, comprising the steps of transmitting identification information from a mobile terminal to a base station for identifying the mobile terminal, receiving said identification information in the base station, comparing the received identification information with selected identification information identifying a number of selected mobile terminals to be prevented from use, and transmitting mode change information to said mobile terminal for changing the mode thereof in case that the received identification information is contained in the selected identification information.

Thus, the present invention provides a simple and effective way of preventing the use of mobile terminals, as e. g. technically defect or stolen mobile terminals. Thereby, the mobile terminal could be switched into different modes depending on the received mode change information. If a mobile terminal is e. g. identified as stolen, the mobile terminal can be completely switched off, whereas in case that a mobile terminal is identified as being technically defect, the mode change information could only switch the mobile terminal into a standby mode in which a warning is output to a user indicating that he should take the mobile terminal to the next service station. In this way, the present invention enables very flexible solutions for different kinds of selected mobile terminals which are stored in a register means in the telecommunication network.

Advantageously, the transmitting means of the mobile terminal according to the present invention transmits the identification information in a registration request message to the base station and the receiving means of the mobile terminal receives the mode change information by means of a registration request answer message from the base station. Thereby, the receiving means may receive the mode change information within the registration request answer message. For example, in a registration request answer message of the respective telecommunication system, in which a registration or a location update attempt of a mobile terminal is answered, a new optional field can be defined, in which the mode change information may be transmitted. Alternatively, it may be advantageous if the control means of the mobile terminal according to the present invention regards a registration reject message containing dedicated information rejecting a registration request as the mode change information.

As an alternative to the above, it can be advantageous if the receiving means transmits its identification information in a special signalling message and receives the mode change information as a paging message transmitted from the base station. In this case, a new message type is defined, which is transmitted from the base station to the mobile terminal as a paging message in response to the transmitted identification information.

In this case it might be further advantageous, if, in case that the mobile terminal transmits the identification information in a registration request message, the mobile terminal receives a notification in the registration request answering message to listen to another channel, in which the base station then transmits the paging message comprising the mode change information.

Further advantageously, the control means of the mobile terminal according to the present invention switches, upon the detection of the mode change information, at least a high frequency portion of the mobile terminal off. Thereby, the degree in which the mobile terminal is switched off, may depend on how the mobile terminal is identified by the network. In case that the mobile terminal is identified as stolen terminal, the entire mobile terminal might be switched off. In case that the mobile terminal is identified as a technically defect terminal, it may be sufficient only to switch the high frequency portion off to avoid the disturbance of the data communication in the respective cell of the telecommunication system. In both cases, it might be advantageous if the control means, upon the detection of the mode change information, causes the output of a warning signal so that the user knows what is going on. This warning signal could be either acoustic or visual or both. In case that the mobile terminal is identified as being technically defect, the mode change information might cause only the output of a warning signal to inform the user to bring his terminal to the next service station to get it repaired. After a certain predetermined time period, when the network still identifies the mobile terminal as being technically defect, the mobile terminal could be switched off so that the user finally has no choice than to get the mobile terminal repaired.

In correspondence to the above, the receiving means of the base station of the network structure according to the present invention may receive the identification information in a registration request transmitted from the mobile terminal and the transmitting means of the base station may transmit the mode change information by means of a registration request answer message to the mobile terminal. Advantageously, the transmitting means of the base station transmits the mode change information within the registration answer message. Alternatively, the transmitting means of the base station transmits a registration reject message in the registration request answer message as the mode change information. The mobile terminal receiving the registration reject message then automatically changes its mode correspondingly.

Alternatively, the transmitting means of the base station may transmit the mode change information as paging message to the mobile terminal.

In the following description, the present invention is explained in more detail by means of preferred embodiments in relation to the enclosed drawings, in which
figure 1 shows a general network structure of a wireless telecommunication system, to which the present invention applies,
figure 2 a schematic diagram of a mobile terminal according to the present invention,
figure 3 a schematic diagram of a part of a network structure for a wireless telecommunication system according to the present invention, and
figure 4 a flow chart of an example of the method for preventing the use of a mobile terminal according to the present invention.

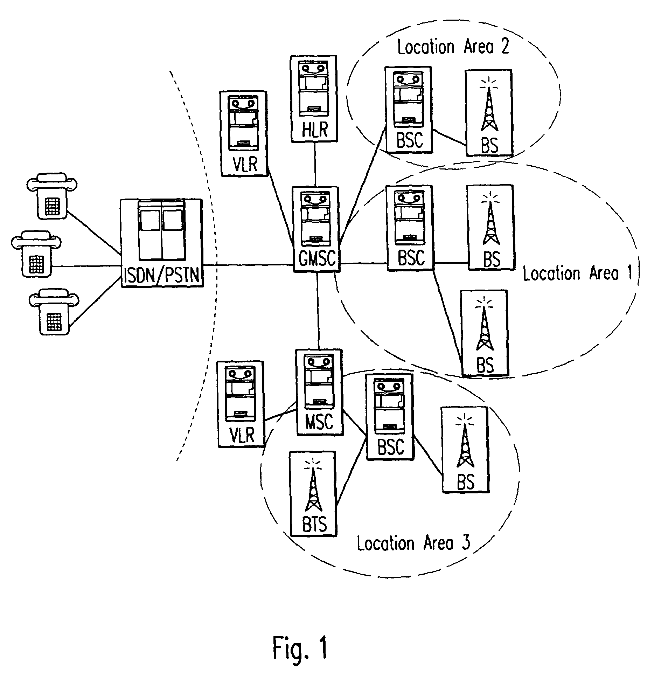

In figure 1, the network infrastructure of a wireless telecommunication system, to which the present invention applies, is shown. Thereby, figure 1 shows the structure of a GSM network only as an example. It is to be understood, that the present invention can relate to any other wireless telecommunication system, in which one or more base stations communicate with one or more mobile terminals.

The network structure shown in figure 1 comprises several base stations BS which are adapted to communicate by an air interface with the mobile terminals (not shown) of the telecommunication system.

One of the most efficient tools for finding or identifying mobile terminals within a wireless telecommunication system, as e. g. a GSM network, is the so-called location updating. The location of a mobile terminal is uniquely identified by the mobile country code, the mobile network code and the location area identity. The location area identity identifies the physical area in which a mobile terminal is located. A location area may consist of one or more physical cells, it is also referred to as a paging area, which a network designates as the location of a mobile terminal for paging tasks.

With each location updating procedure, the mobile terminal reads its location from the control channel transmitted by its serving base station BS and reports it back to the network. In a GSM network, as shown in figure 1, two register means store the location-related data of a mobile terminal, the home location register HLR and the visitor location register VLR. The HLR keeps data that are permanently associated with individual mobile terminals as well as the current location. The permanent data include subscription details allocated to the subscriber. The VLR keeps temporary data on a subscriber for only as long as the subscriber is located in the area belonging to a particular VLR. The temporary data contains the subscription related data obtained from the subscribers HLR as well as the exact location of the mobile terminal in the area of the VLR. Figure 1 shows two VLR areas. Location area 1 and location area 2 belong to the first VLR and location area 3 belongs to the second VLR.

Further, the network comprises several mobile services switching centers MSCs, but only those connected to an ISDN or a PSTN are used as gateway MSCs, i. e. GMSCs, with an attached HLR, since this is the switch through which incoming calls enter the system. The incoming calls for mobile terminals in the network cannot be rooted properly until the HLR of the system is checked for the location of the target mobile terminal and the subscribers authorized services. The GMSC and the MSC each have their own VLR. Upon performing a location update, a mobile terminal transmits a registration request message to the closest or the respectively serving base station. In the network, this registration request message is processed, whereby the respective base station answers the registration request message with a registration request answer message, in which, depending on the processing, the registration request is either acknowledged or rejected. In case that the registration request from the mobile terminal is acknowledged, the network knows the exact location of the mobile terminal and therefore, which base station should send paging messages that attract the attention of the mobile terminal in case that calls for the mobile terminal are arriving in the network.

Generally speaking, there are three different types of location updating procedures. Firstly, a registration takes place whenever a mobile terminal is switched on. After an internal initialisation including necessary SIM (subscriber identity module) procedures, the mobile terminal checks for an available network. When it finds a network, the mobile terminal is able to read important information such as the location information. Two cases are distinguished here. In the first case, the mobile terminal always initiates a location update procedure. In the second case, a location update procedure is completed only when the location area identity the mobile terminal reads from the downlink control channel has changed since it was last switched off.

Secondly, periodic location updating is performed after a period of time predefined by the network and constantly sent to all active mobile terminals monitoring the control channel. If the mobile terminal does not register after this time, then the network will assume that the mobile terminal is no longer available and will mark it as not reachable.

Thirdly, when the mobile terminal detects a location area change it will notify the network that it is now located in a different area. As shown in figure 1, a mobile terminal could move around within location area 1, from one cell to another, without the need for a location update. If it moves from location area 1 to location area 2 the respective VLR and HLR must be notified. Correspondingly, if the mobile terminal moves from location area 1 or 2 into location area 3, then the HLR must be notified of the change and the VLR in area 3 will store the mobile's new location area identity.

In all three above-mentioned location updating procedures, the first location updating message sent from the mobile terminal to the respective base station is called registration request message throughout the present specification. According to an aspect of the present invention, each registration request message sent from a mobile terminal to a base station BS comprises identification information uniquely identifying the mobile terminal (also called IMEI, International Mobile Equipment Identity). A base station BS receiving a registration request message comprising identification information from a mobile terminal supplies the received identification information to a register means, as e. g. the VLR or HLR as shown in figure 1, which compares the received identification information with stored identification information and outputs a corresponding control signal to the base station in case that the received identification information is contained in or corresponds to stored identification information. The stored identification information consists according to the present invention of a number of unwanted, e. g. stolen or technically defect, mobile terminals. In case that the identification information received from a mobile terminal is contained in the stored identification information, the respective base station transmits corresponding mode change information back to the mobile terminal for preventing the use of the mobile terminal. Thereby, the mode change information causes a mode change of the receiving mobile terminal so that the use of the mobile terminal is prevented.

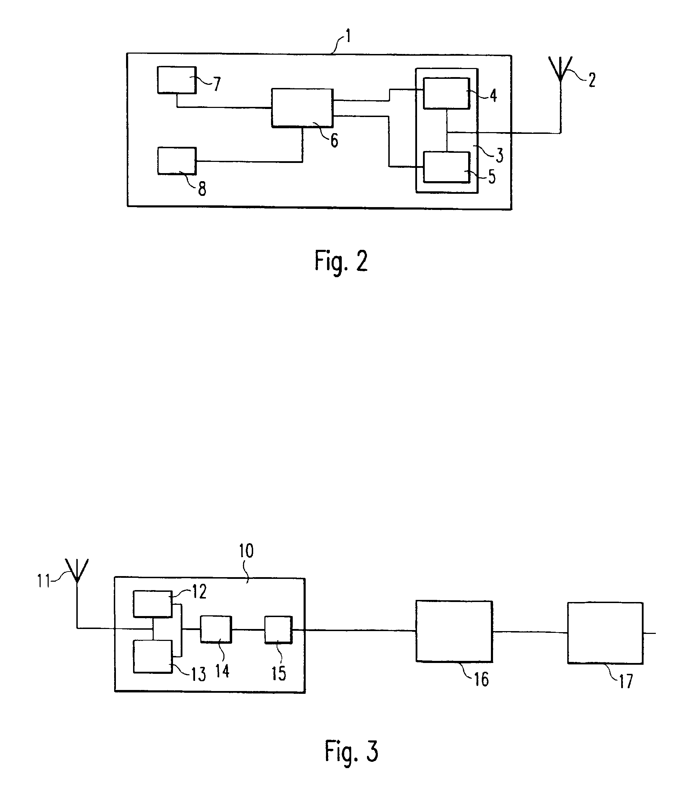

Figure 2 shows a schematic diagram of a mobile terminal 1 for a wireless telecommunication system according to the present invention. The mobile terminal 1 shown in figure 2 may e. g. be a mobile terminal for a GSM system and therefore able to communicate with the GSM network shown in figure 1.

The mobile terminal 1 according to the present invention comprises transmitting means 5 for transmitting identification information identifying the mobile terminal 1 to a base station of the wireless telecommunication system, receiving means 4 for receiving mode change information from the base station depending on the identification information previously transmitted, control means 6 for detecting mode change information received in the receiving means 4 and for changing the mode of the mobile terminal 1 depending on detected mode change information for preventing the use of the mobile terminal 1.

The identification information or international mobile equipment identity (IMEI) may e. g. be stored in a memory means of the mobile terminal 1. The identification information uniquely identifying the mobile terminal 1 should be transmitted to a respective base station upon building up a connection. Therefore, the identification information is advantageously transmitted in a registration request message during a location update procedure as described in relation to figure 1. The receiving means 4 receives corresponding mode change information within a registration request answer message transmit from the corresponding base station to the mobile terminal 1. The control means 6 detecting received mode change information correspondingly changes the mode of the mobile terminal 1. Alternatively, the control means 6 may regard or treat a registration reject message rejecting the registration request message as mode change information and change the mode of the mobile terminal 1 correspondingly.

A further possibility is that the mobile terminal 1 transmits its identification information in a special signalling message, whereby the receiving means 4 of the mobile terminal 1 receives the mode change information as a paging message transmitted from the base station.

Upon detection of mode change information, the control means 6 switches off at least a high frequency portion, as e. g. a transceiver portion 3 comprising the transmitting means 5 and the receiving means 4, so that the mobile terminal 1 cannot transmit/receive HF signals anymore. This solution is preferable in case that the mobile terminal 1 had been stolen and is registered as being stolen in the network.

In case that the mobile terminal 1 is only technically defect, which has been recognized by the network, the control means 6, upon the detection of received mode change information, causes the output of a warning signal. The output of the warning signal could thereby also accompany the switch-off of the mobile terminal 1 in case of theft. The warning signal can e. g. be an acoustic signal output by a loudspeaker 7 of the mobile terminal 1 and/or a visual signal output by a display 8 of the mobile terminal 1. In case that the mobile terminal 1 has been recognized as being technically defect and a user does not switch his mobile terminal off or brings it to service upon receiving the warning signal, the network could, after recognizing that the mobile terminal 1 had not been switched off or repaired after a predetermined time period, issue another mode change information which then switches off at least a high frequency portion of the mobile terminal so that a further use is prevented. Further, the acoustic or visible warning signal might indicate the reason for a warning signal or the switch-off to a user.

As explained above, the control means 6 is able to detect different mode change information and change the mode of the mobile terminal 1 in different ways depending on the kind of the received mode change information.

Figure 3 shows a schematic diagram of a part of a network structure for a wireless telecommunication system according to the present invention. The network structure according to the present invention comprises a base station 10 with receiving and transmitting means 12, 13 for communicating with one or more mobile terminals, as e. g. the mobile terminal 1 shown in figure 2, and a register means 17 for storing selected identification information identifying a number of selected mobile terminals. The base station 10 might be one of the base stations BS shown in the GSM network structure of figure 1, whereby the register means 17 may in this case be either a VLR or a HLR as shown in figure 1. Between the base station 10 and the register means 17, a base station switching center 16, as e. g. shown as BS 10 in figure 1, is located. The register means 17 can be implemented in a MSC as shown in figure 1 or it may be provided separately, so that between the base station switching center 16 shown in figure 3 and the register means 17 a mobile services switching center has to be provided. The selected identification information stored in the register means 17 is basically a list of stolen mobile terminals or a list of mobile terminals having been detected as technically defect or any other kind of unwanted mobile terminals.

The base station 10, upon receiving identification information from the mobile terminal, e. g. the mobile terminal 1, supplies the received identification information to the register means 17 via the base station switching center 16. The register means 17 compares the received identification information with the stored selected identification information. In case that the received identification information is contained in the selected identification information, i. e. the mobile terminal having sent the identification information is listed in the stored identification information, the register means 17 outputs a corresponding control signal via the base station switching center 16 to the base station 10. The base station 10 receives the control signal via its communication means 15 and supplies the control signal to a control means 14. The control means 14 transforms the received control signal into a mode change information which is transmitted to the mobile terminal via the transmitting means 13 and a corresponding antenna 11.

The mode change information transmitted by the transmitting means 12 of the base station 10 thereby depends on the control signal received from the register means 17. In other words, the base station 10 transmits mode change information depending on how the mobile terminal having sent the identification information has been identified by the register means 17. In case that the register means 17 identifies the mobile terminal as being stolen, the mode change information is an information switching off at least a high frequency portion of the mobile terminal. In case that the register means 17 identifies the mobile terminal as only being technically defect, the mode change information transmitted from the base station 10 only causes the output of an acoustic and/or visible warning signal in the mobile terminal in order to warn the user to get the mobile terminal repaired. Only in case that the technically defect mobile terminal has not been repaired after a predetermined time period, the base station 10 transmits mode change information to the mobile terminal causing the switching off of at least a high frequency portion of the mobile terminal in order to avoid further problems. Alternatively, the control means 14 may always cause a transmission of the same kind of mode change information, i. e. no matter if the mobile terminal is stolen or only technically defect, the mode change information always causes the switch-off of at least a high frequency portion of the mobile terminal. However, it is to be noted that mode change information is only transmitted from the base station 10 if the register means 17 identifies the mobile terminal as being comprised in the list of selected mobile terminals stored in its data base.

The base station 10 may transmit the mode change information in different ways. Basically, a mobile terminal should transmit its identification information at the beginning of a connection to a base station 10 in order to allow the identification of the mobile terminal and an eventual switch-off at an early stage. Hereby, the identification information could be transmitted in a registration request during a location update procedure. The base station 10 then answers the registration request with a registration request answer. The mode control information could be transmitted in this registration request answer. Another possibility is that the mobile terminal transmits a registration reject message answering the registration request, whereby the mobile terminal treats the registration reject message as the mode change information causing a corresponding mode change. Alternative to the use of a location update procedure, a mobile terminal could use a specially defined signalling channel to transmit the identification information. The base station 10 receiving the identification information then transmits the mode change information in a special paging channel.

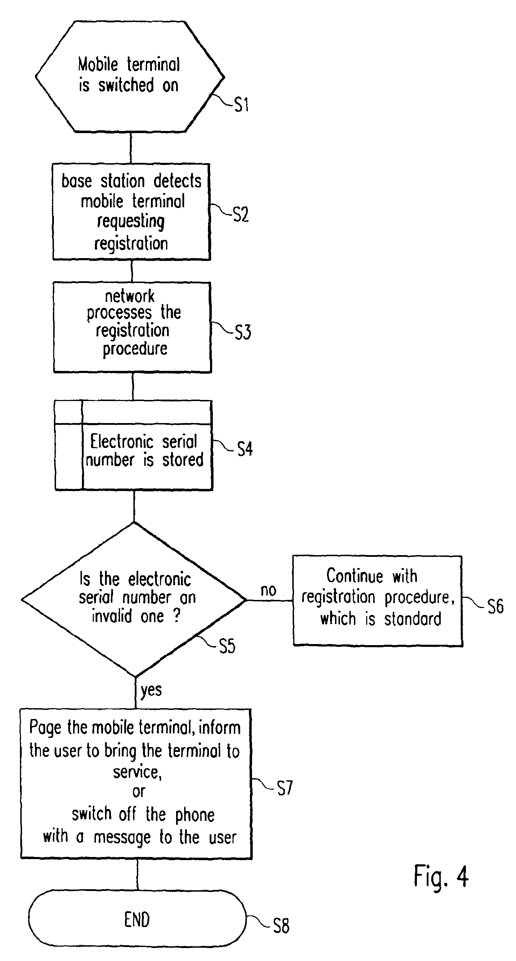

Figure 4 shows a flow chart of an example of a method for preventing the use of selected mobile terminals of a wireless telecommunication system according to the present invention. In the shown example, a location updating procedure is used for the transmission of the identification information and the mode change information.

In a first step S1, the mobile terminal, as e. g. the mobile terminal 1 as shown in figure 2, is switched on and transmits a registration request message containing its electronic serial number or identification information to a base station. In a step S2, a base station, as e. g. the base station 10 shown in figure 3, detects the registration request message from the mobile terminal. Then, the base station processes the registration procedure in a step S3. In a step S4, the electronic serial number or identification information of the mobile terminal is stored in a register of the network, as e. g. the register means 17 as shown in figure 3. Then, the register checks if the received electronic serial number is invalid (unwanted) or not in a step S5. In case that the serial number is not invalid, which means that the mobile terminal is a normal mobile terminal allowed for the use in the corresponding network, the registration procedure is continued in a step S6 and the mobile terminal is registered in a normal way to be able to communicate with the base station. In case that the register detects that the mobile terminal is not wanted in the system, a mode change information is transmitted from the base station to the mobile terminal in a step S7. The mode change information e. g. informs the user to bring the mobile terminal to a service in case that the mobile terminal is technically defect, or the mode change information switches off the mobile terminal automatically, whereby a message is issued at the same time to inform the user why the mobile terminal is switched off. In a step S8, the use preventing procedure is terminated.

## Claims

1. Mobile terminal (1) for a wireless telecommunication system, with
transmitting means (5) for transmitting identification information identifying the mobile terminal to a base station (10) of the wireless telecommunication system,
receiving means (4) for receiving mode change information from the base station (10), depending on the identification information previously transmitted,
control means (6) for detecting mode change information received in said receiving means (4), and
for changing the mode of the mobile terminal (1) depending on detected mode change information for preventing the use of said mobile terminal (1).

2. Mobile terminal (1) for a wireless telecommunication system according to claim 1,
**characterized in,**
that said transmitting means (5) transmits said identification information in a registration request message to said base station (10), and said receiving means (4) receives said mode change information by means of a registration request answer message from said base station (10).

3. Mobile terminal (1) for a wireless telecommunication system according to claim 2,
**characterized in,**
that said receiving means (4) receives said mode change information within said registration request answer message.

4. Mobile terminal (1) for a wireless telecommunication system according to claim 2,
**characterized in,**
that said control means (6) regards a registration reject message containing dedicated information comprised in said registration request answer message as said mode change information.

5. Mobile terminal (1) for a wireless telecommunication system according to claim 1 or 2,
**characterized in,**
that said receiving means (4) receives said mode change information as a paging message transmitted from said base station (10).

6. Mobile terminal (1) for a wireless telecommunication system according to one of the claims 1 to 5,
**characterized in,**
that said control means (6), upon the detection of mode change information, switches off at least a high frequency portion of said mobile terminal.

7. Mobile terminal (1) for a wireless telecommunication system according to one of the claims 1 to 6,
**characterized in,**
that said control means (6), upon the detection of mode change information, causes the output of a warning signal.

8. Network structure for a wireless telecommunication system, with
a base station (10) comprising receiving and transmitting means (12, 13) for communicating with one or more mobile terminals (1), and
a register means (17) for storing selected identification information identifying a number of selected mobile terminals,
whereby said base station (10), upon receiving identification information from a mobile terminal (1), supplies said received identification information to said register means (17), which compares said received identification information with the selected identification information and outputs a corresponding control signal to the base station (10) in case that the received identification information is contained in the selected identification information, whereafter the base station (10) transmits mode change information to said mobile terminal (1) for preventing the use of said mobile terminal.

9. Network structure according to claim 8,
**characterized in,**
that said receiving means (13) of the base station (10) receives said identification information in a registration request transmitted from the mobile terminal (1) and said transmitting means (12) of the base station transmits said mode change information by means of a registration request answer message to said mobile terminal (1).

10. Network structure according to claim 9,
**characterized in,**
that said transmitting means (12) transmits said mode change information within said registration answer message

11. Network structure according to claim 9,
**characterized in,**
that said transmitting means (12) transmits a registration reject message in said registration request answer message as said mode change information.

12. Network structure according to claim 8 or 9,
**characterized in,**
that said transmitting means (12) transmits said mode change information as a paging message to said mobile terminal.

13. Method for preventing the use of selected mobile terminals of a wireless telecommunication system, comprising the steps of
transmitting identification information from a mobile terminal (1) to a base station (10) for identifying the mobile terminal (1),
receiving said identification information in said base station (10),
comparing said received identification information with selected identification information identifying a number of selected mobile terminals to be prevented from use,
transmitting mode change information to said mobile terminal (1) for changing the mode thereof in case that the received identification information is contained in the selected identification information.

14. Method for preventing the use of selected mobile terminals according to claim 13,
**characterized in,**
that said identification information is transmitted in a registration request message from said mobile terminal (1) to said base station (10) and said mode change information is transmitted by means of a registration request answer message from said base station (10) to said mobile terminal (1).

15. Method for preventing the use of selected mobile terminals according to claim 14
**characterized in,**
that said mode change is transmitted within said registration request answer message.

16. Method for preventing the use of selected mobile terminals according to claim 14,
**characterized in,**
that a registration reject message is transmitted in said registration answer message as said mode change information.

17. Method for preventing the use of selected mobile terminals according to claim 13 or 14,
**characterized in,**
that said mode change information is transmitted as a paging message to said mobile terminal (1).

18. Method for preventing the use of selected mobile terminals according to one of the claims 13 to 17,
**characterized in,**
that at least a high frequency portion of said mobile terminal (1) is switched off upon detection of received mode change information in the mobile terminal (1).

19. Method for preventing the use of selected mobile terminals according to one of the claims 13 to 18,
**characterized in,**
that a warning signal is output upon the detection of received mode change information in the mobile terminal (1).
